# EUROPÄISCHE PATENTSCHRIFT

(11) **EP 4 061 605 B1**
(45) Veröffentlichungstag und Bekanntmachung des Hinweises auf die Patenterteilung: **17.12.2025**
(21) Anmeldenummer: 20810919.9
(22) Anmeldetag: 18.11.2020
(51) Int. Cl.: B29C 45/14, B29L 31/30, B29L 31/00

(54) **RANDGESTALTUNG EINER FLÄCHIGEN VERSTEIFUNGSSTRUKTUR FÜR EIN BAUTEIL**
EDGE DESIGN OF A FLAT STIFFENING STRUCTURE FOR A COMPONENT
CONCEPTION DE BORD D'UNE STRUCTURE DE RAIDISSAGE PLATE POUR UN COMPOSANT

(30) Priorität: 22.11.2019 DE 102019131625
(43) Veröffentlichungstag der Anmeldung: 28.09.2022
(73) Patentinhaber: Kautex Textron GmbH & Co. KG, 53229 Bonn (DE)
(72) Erfinder: SIGGIA, Fabian, 51143 Köln (DE); HÜTZEN, Markus, 53757 Sankt Augustin (DE)
(74) Vertreter: Richly & Ritschel Patentanwälte PartG mbB
(86) Internationale Anmeldenummer: PCT/EP2020/082571
(87) Internationale Veröffentlichungsnummer: WO 2021/099409

(56) Entgegenhaltungen:
- EP-A1- 1 048 442
- EP-B1- 1 048 442
- WO-A1-2018/189635
- DE-A1- 102011 056 759
- DE-C1- 19 900 178
- JP-A- H0 872 094
- US-A1- 2006 181 089

## Beschreibung

### Hintergrund

Zur Reduzierung des Bauteilgewichts und Steigerung der Bauteilperformance kommen im Automobilbereich zunehmend Faserverbundwerkstoffe zum Einsatz. Ein Ansatz für hochbelastete, im Spritzgießverfahren hergestellte Bauteile ist das einstufige Umformen und Hinterspritzen (sogenanntes "In-Mould-Forming") von thermoplastischen, endlosfaserverstärkten Halbzeugen (sogenannten Organosheets). Ein entsprechendes Vorgehen ist auch beim Fließpressverfahren möglich. Diese Technologien kombinieren die herausragenden mechanischen Eigenschaften von endlosfaserverstärkten Faserverbundkunststoffen (FVK) mit der hohen Wirtschaftlichkeit und Möglichkeit der Funktionalisierung im Spritzgießverfahren bzw. Fließpressverfahren. Bestehende Produktanwendungen sind unter anderem Frontendmodulträger, Sitzstrukturen, Türsysteme, Fahrzeugunterbodenstruktur oder Unterfahrschutz aber auch Kraftstofftank- und Batteriegehäusesysteme.

Entsprechende Bauteile weisen Bereiche aus Faserverbundmaterial und Bereiche aus (Spritzgieß-/Fließpress-) Material auf, die jeweils in Übergangsbereichen verbunden sind. Charakteristisch für solche Bauteile ist, dass die Steifigkeit der Spritzgieß-/Fließpress-Komponente deutlich unter der Steifigkeit der Faserverbund-Komponente liegt. Bedingt durch den Steifigkeitssprung stellt der Übergang beider Bereiche eine Spannungskonzentration und dadurch Schwachstelle bei mechanischer Beanspruchung, insbesondere bei Aufprall-, oder Crash-Lasten, dar. EP1048442A1 offenbart beispielhaft ein verstärktes Bauteil.

Die Anbindung von Spritzgieß-/Fließpressmaterial und FVK-Halbzeug wird üblicherweise durch ein Überspritzen bzw. Umformen der Halbzeug-Randbereiche erzeugt. Ein vollflächiges Überspritzen/Umformen ist aus Leichtbauaspekten in der Regel nicht sinnvoll. Bestehende Gestaltungsrichtlinien für diese Übergangsbereiche sowie für Krafteinleitungs- und Funktionselemente beschreiben eine Kombination aus stirnseitiger und einseitig überlappender Anspritzung/Anformung. Hier stehen vor allem die visuellen und haptischen Eigenschaften des Bauteils (Besäumen) und weniger die mechanischen Eigenschaften im Vordergrund. Nachteilig hierbei ist, dass die bekannten Konstruktionen nicht für eine hohe mechanische Verbundfestigkeit und Energieaufnahme bei hohen Belastungen geeignet sind. Der Erfindung liegt die Aufgabe zugrunde, Konstruktionen bereitzustellen, die für eine hohe mechanische Verbundfestigkeit und Energieaufnahme bei hohen Belastungen geeignet sind oder/und optisch ansprechend sind.

Zur Lösung dieser Aufgabe wird ein Bauteil und ein Verfahren zur Herstellung dieses Bauteils bereitgestellt, wie sie in den beigefügten Ansprüchen definiert sind.

### Eingehende Beschreibung

Die Erfindung ist gerichtet auf ein Bauteil umfassend eine flächige Verstärkungskomponente mit einer ersten Steifigkeit und ein flächiges Material mit einer zweiten Steifigkeit, wobei die erste Steifigkeit höher ist als die zweite Steifigkeit, wobei die Verstärkungskomponente an einer ersten Schmalseite ein erstes Ende und das Material an einer zweiten Schmalseite ein in zwei Leisten aufgeteiltes zweites Ende aufweist, und die zwei Leisten des zweiten Endes das erste Ende in einem Umschließungsbereich beidseitig umschließen.

Durch die zweiseitige Umschließung der flächigen Verstärkungskomponente durch das flächige Material bietet das Bauteil den Vorteil, dass die Stabilität des Verbundes aus flächiger Verstärkungskomponente und Material auch dann erhalten bleibt, wenn starke Kräfte auf den Verbund einwirken. Insbesondere vertikal zur Fläche des Bauteils wirkenden Kräften kann das Bauteil besser widerstehen. Eine derartiges Bauteil, das die flächige Verstärkungskomponente beidseitig umschließt, ist seitenunabhängig bzw. richtungsunabhängig mechanisch gleichermaßen stabil für eine vertikal angreifende Kraft (zum Beispiel, von innen oder außen bzw. bei Über- und Unterdruck auf gegenüberliegenden Seiten des Bauteils) und daher kraftrichtungsabhängig stabil.

"Flächig" im Sinne der Erfindung bedeutet, dass der Gegenstand sich in einer Fläche erstreckt, und seine vertikale Ausdehnung im Vergleich zu seiner horizontalen Ausdehnung sehr gering ist. Flächige Gegenstände besitzen am Ende ihrer horizontalen Ausdehnung eine oder mehrere Schmalseiten, die durch die horizontal sich erstreckenden Ober- und Unterseiten eingefasst werden. In der vorliegenden Erfindung wird die Schmalseite des flächigen Materials durch zwei Leisten geformt, die sich parallel zueinander über die Länge der Schmalseite des flächigen Materials erstrecken. Somit können die zwei Leisten das Ende der flächigen Verstärkungskomponente zwischen sich (z.B. lückenlos, formschlüssig, und/oder stoffschlüssig) aufnehmen. Die Oberseiten bzw. Unterseiten der flächigen Verstärkungskomponente und des flächigen Materials verlaufen in einer Ebene oder in mehreren Ebenen, die über die ganze Erstreckung oder einen Teil der Erstreckung der Ebenen zueinander parallel sind. Dabei können die flächigen Verstärkungskomponenten als auch das flächige Material Abschnitte enthalten, bei denen die Oberseiten bzw. Unterseiten gekrümmt sind.

In einer horizontalen Anordnung weist das Bauteil a) einen Bereich der flächigen Verstärkungskomponente, b) einen Umschließungsbereich, und c) einen Grundmaterialbereich des flächigen Materials in dieser Reihenfolge auf.

Ein Umschließungsbereich im Sinne der Erfindung besteht in horizontaler Anordnung aus i) einem Überlappungsbereich, das heißt, dem Bereich, in dem die Leisten mit der flächigen Verstärkungskomponente in der Fläche überlappen, und ii) einen Rampenbereich, der an den Überlappungsbereich grenzt und in dem keine Überlappung stattfindet. Im Rampenbereich kann das flächige Material eine Wanddicke aufweisen, die größer ist als die Wanddicke des flächigen Materials in dem Grundmaterialbereich. Der Rampenbereich ist zwischen Überlappungsbereich und Grundbereich angeordnet.

Als Wanddicke des Materials im Überlappungsbereich wird die Wanddicke einer Leiste des flächigen Materials verstanden. Die Wanddicke des Materials außerhalb des Überlappungsbereichs entspricht schlicht der Wanddicke des flächigen Materials in diesem Bereich.

Die beiden Leisten des flächigen Materials können einen zueinander unsymmetrischen oder symmetrischen Aufbau besitzen, wobei eine gedachte Ebene durch die horizontale Mitte der flächigen Verstärkungskomponente die Spiegelebene bildet. Vorzugsweise ist der Aufbau symmetrisch. Die Stirnseiten sowohl der ersten als auch der zweiten Leiste können den gleichen Abstand zu einer Schmalseite der flächigen Verstärkungskomponente aufweisen. Das bedeutet, dass die Stirnseiten der Leisten genau übereinander angeordnet sind, oder nur um einen geringen Grad von 20 % - 0 % oder 10 % - 0 % zueinander versetzt sind.

Steifigkeit im Sinne der Erfindung ist die Dehnsteifigkeit, Schubsteifigkeit, Biegesteifigkeit und/oder Torsionssteifigkeit. Dass die erste Steifigkeit höher ist als die zweite Steifigkeit bedeutet, dass die Dehnsteifigkeit, Schubsteifigkeit, Biegesteifigkeit und/oder Torsionssteifigkeit der flächigen Verstärkungskomponente höher ist als die entsprechende Dehnsteifigkeit, Schubsteifigkeit, Biegesteifigkeit und/oder Torsionssteifigkeit des flächigen Materials. Die erste Steifigkeit, ausgedrückt insbesondere als die Dehnungssteifigkeit (das Elastizitätsmodul), kann mindestens 2-mal so hoch, 2 bis 250-mal, 3 bis 200-mal, oder 20 bis 100-mal so hoch sein wie die zweite Steifigkeit, ausgedrückt insbesondere als Dehnungssteifigkeit (Elastizitätsmodul).

Das flächige Material verläuft über den gesamten Umschließungsbereich (im Querschnitt, d.h. also quer zur Ausdehnung der Oberfläche des Materials) bogenartig.

Dadurch wird der Vorteil erreicht, dass das Material im Überlappungsbereich, in dem bei Belastung die stärksten Kräfte auftreten, besonders dick ausgeprägt ist. Ferner erlaubt der bogenartige Verlauf, dass die Wanddicke des Materials von dem Anfangspunkt des Bogens auf der Seite hin zum Grundbereich des Materials zu dem Endpunkt des Bogens, der an die flächige Verstärkungskomponente grenzt, zuerst langsam bis zu einem Maximalwert zunimmt und dann wieder kontinuierlich abnimmt. Somit werden stark abgesetzte Übergänge zwischen der flächigen Verstärkungskomponente und dem flächigen Material vermieden, und dem Bauteil zusätzliche Stabilität verliehen, die ein Auflösen des Bauteils unter Last vermeidet.

Bogenartig im Sinne der Erfindung kann eine fortlaufend stetige Zunahme/Abnahme der Wanddicke des Materials im Übergangsbereich bezeichnen, also eine tatsächliche Bogenform. Bogenartig kann aber bedeuten, dass eine Form vorliegt, die aus mehreren geraden Abschnitten besteht, wobei die Übergänge den mehreren geraden Abschnitten eine Kante ausgeprägt sind und/oder durch einen Bogen gebildet werden.

Die Wanddicke des Materials ist an der Position, an der das erste Ende eine Schmalseite der flächigen Verstärkungskomponente bildet, maximal, das heißt, dass die Oberfläche des Materials an der Position, an der das erste Ende eine Schmalseite der flächigen Verstärkungskomponente bildet, den größten Abstand zur gegenüberliegenden Oberfläche der Verstärkungskomponente aufweist. Die Wanddicke des Materials einer Leiste oder der jeweils beiden Leisten ist an dieser Position gleich oder größer als die Hälfte der Grundmaterialdicke. In der Summe können also die Wanddicken des Materials an dieser Position in den Leisten gleich oder größer sein als die Grundmaterialdicke. Mit der Position der Wanddicke des Materials, an der das erste Ende eine Schmalseite der flächigen Verstärkungskomponente bildet, ist eine Position auf der Oberfläche des Materials bezeichnet, von der ein Lot auf das umschlossene erste Ende der Schmalseite der flächigen Verstärkungskomponente gefällt werden kann, also den Punkt, an der die Schmalseite der flächigen Verstärkungskomponente auf das zweite Ende des flächigen Materials trifft.

Dadurch ist die Wanddicke des Materials, bzw. der Leiste, der Leisten, die das Material an dieser Position bildet, am höchsten in dem Übergangsbereich zwischen flächiger Verstärkungskomponente und dem flächigen Material. Diese Position ist diejenige, an der es bei Belastung am ehesten zu einem Bruch des Bauteils kommen könnte. Daher wird durch die Wanddicke des Materials an dieser Position einem Bruch des Bauteils entgegengewirkt.

Ferner kann die minimale Wanddicke gleich oder größer sein als die Grundmaterialwanddicke, das heißt als die Wanddicke des Materials außerhalb des Umschließungsbereichs.

Daher wird durch die Wanddicke des Materials an dieser Position einem Bruch des Bauteils in besonders vorteilhafter Weise entgegengewirkt.

Die Grundmaterialwanddicke kann ≥ 0,8 mm und ≤ 10 mm, ≥ 1 mm und ≤ 5 mm, ≥ 1,5 mm und ≤ 4,5 mm, ≥ 2,0 mm und ≤ 3,5 mm, ≥ 2,0 mm und ≤ 3 mm, oder ≥ 2,25 mm und ≤ 2,75 mm sein.

Der Rampenbereich kann eine Länge von ≥ 1,5 mm und ≤ 15 mm, ≥ 1,5 mm und ≤ 5,0 mm, ≥ 2,0 mm und ≤ 4,5 mm, ≥ 2,5 mm und ≤ 4,0 mm, oder ≥ 3,00 mm und ≤ 3,50 mm haben. Die Länge des Rampenbereichs ist definiert als der Abstand zwischen dem Anfangspunkt des Bogens (auf der Seite hin zum Grundbereich des Materials) und dem Punkt an dem ein Lot von der Position, an dem das Wanddicke des Materials im Bogen maximal ist, auf die gedachte Verlängerung der Oberfläche des flächigen Materials im Grundbereich gefällt wird.

Der Überlappungsbereich kann eine Länge von ≥ 1,5 mm und ≤ 15 mm, ≥ 5,0 mm und ≤ 15,0 mm, ≥ 7,0 mm und ≤ 12,0 mm, ≥ 8,0 mm und ≤ 11,0 mm, oder ≥ 9,00 mm und ≤ 10,00 mm haben.

Die maximale Wanddicke kann das das 0,5-fache bis 2-fache, 1-fache bis 2-fache, das 1-fache bis 1,75-fache, das 1-fache bis 1,5-fache, oder das 1-fache bis 1,25-fache der Grundmaterialwanddicke betragen.

Die Länge des Überlappungsbereiches zwischen Verstärkungskomponente und Material kann das 0,5-fache bis 10-fache, 1,5- bis 8-fache, das 1,7- bis 6-fache oder das 2- bis 4-fache der Grundmaterialwanddicke betragen.

Es hat sich erwiesen, dass dieses Verhältnis zwischen Länge des Überlappungsbereiches und Material eine besonders hohe Stabilität des Bauteils sicherstellt.

In der Stirnseite mindestens einer der Leisten können Einbuchtungen (d.h. Ausnehmungen oder Aussparungen) vorgesehen sein.

Diese Einbuchtungen können durch in der Form bzw. in dem Werkzeug, die/das zur Herstellung des Bauteils verwendet wird, vorgesehene Niederhalter hergestellt werden. Niederhalter können eine Verschiebung oder ein "Aufspleißen" (z.B. Lösen des Verbunds der Gewebelagen im Falle eines Organosheets) der Verstärkungskomponente durch die anströmende (Kunststoff)Schmelze verringern bzw. vermeiden und die flächigen Verstärkungskomponente gegen den Schmelzestrom oder das angepresste Material stabilisieren, so dass dieser idealerweise mittig zur Wanddicke gehalten wird (bzw. dieser nicht einseitig zum Randbereich der Wandung gedrückt wird).

Mit den Stirnseiten der Leisten sind die Seiten der Leisten gemeint, die der flächigen Verstärkungskomponente zugewandt sind und im Überlappungsbereich liegen. Daher ragen die Einbuchtungen von der Stirnseite der Leisten aus mit einem Winkel von 80° bis 100°, vorzugsweise 90°, in die Leisten.

In beiden Leisten können Einbuchtungen vorgesehen sein.

Dies bietet den Vorteil, dass während des Herstellungsprozesses eine weitgehend symmetrische Stabilisierung der flächigen Verstärkungskomponente gegenüber dem Schmelzestrom oder dem angepressten Material erfolgt.

Die Einbuchtungen der ersten Leiste können gegenüber den Einbuchtungen der zweiten Leiste gegenüberliegend angeordnet sein.

Somit liegen in den zwei Leisten die jeweiligen Einbuchtungen direkt übereinander.

Dies bietet den Vorteil, dass während des Herstellungsprozesses eine sehr symmetrische Stabilisierung der flächigen Verstärkungskomponente gegenüber dem Schmelzestrom oder dem angepressten Material erfolgt.

Die Einbuchtungen können zwei unterschiedliche Längen aufweisen und die Einbuchtungen mit zwei unterschiedlichen Längen können alternierend angeordnet sind.

Insbesondere können in einer der Leisten eine erste Gruppe von Einbuchtungen mit einer Länge und eine zweite Gruppe von Einbuchtungen mit zweiter Länge vorliegen, wobei die erste Länge größer als die zweite Länge ist.

Sowohl in der ersten als auch in der zweiten Leiste können diese erste Gruppe und diese zweite Gruppe von Einbuchtungen vorliegen.

Die Einbuchtungen der zweiten Gruppe von Einbuchtungen in der ersten Leiste können den Einbuchtungen der ersten Gruppe in der zweiten Leiste gegenüberliegen; und die Einbuchtungen der ersten Gruppe von Einbuchtungen in der ersten Leiste den Einbuchtungen der zweiten Gruppe in der zweiten Leiste gegenüberliegen. Dadurch alterniert die Länge der Einbuchtungen sowohl innerhalb einer Leiste als auch zwischen den Leisten.

Diese Anordnung hat den Vorteil, dass das fertige Bauteil bei Einsatz zum Beispiel in einem Fluidbehälter besonders dicht gegenüber dem Fluid ist. Ferner wird eine sichtbare Bindenaht vermieden.

Alternativ können die Einbuchtungen der zweiten Gruppe von Einbuchtungen in der ersten Leiste den Einbuchtungen der zweiten Gruppe in der zweiten Leiste gegenüberliegen; und die Einbuchtungen der ersten Gruppe von Einbuchtungen in der ersten Leiste können den Einbuchtungen der ersten Gruppe in der zweiten Leiste gegenüberliegen. Dadurch alterniert die Länge der Einbuchtungen nur innerhalb der jeweiligen Leiste.

Dies kann den Vorteil haben, dass eine verbesserte Abdichtung gegenüber Fluid erreicht wird, aber der Herstellungsprozess wegen der einfacheren Form, die zur Herstellung dieser Ausführungsform benötigt wird, relativ einfach ist.

Die Einbuchtungen können eine Länge von 100% bis 25% der Länge des Überlappungsbereichs aufweisen. Vorzugsweise können die Einbuchtungen mit einer Länge von 95% bis 70% der Länge des Überlappungsbereichs vorgesehen sein, und/oder es können Einbuchtungen mit einer Länge von 25% bis 50% der Länge des Überlappungsbereichs vorgesehen sein (insbesondere können diese unterschiedlichen Längen kombiniert werden, wenn zwei Gruppen von Einbuchtungen mit unterschiedlichen Längen vorgesehen sind).

Ferner können die Einbuchtungen innerhalb einer Leiste oder innerhalb beider Leisten zueinander ungefähr äquidistant sein (ungefähr heißt bis zu 25% Abweichung des Abstandes zwischen allen Einbuchtungen um einen Mittelwert des Abstandes). Insbesondere können die Abstände zwischen den Einbuchtungen in beiden Leisten ungefähr gleich sein. Es wird aber auch offenbart, dass je nach konstruktiven Vorgaben die Abstände zwischen den Einbuchtungen innerhalb einer oder beider Leisten zumindest in einem Teilbereich der jeweiligen Leiste (beispielsweise bis 30%) frei angepasst werden können, bzw. variabel sind.

Durch die Äquidistanz wird die Druckverteilung bei Belastung weiter verbessert.

Die Verstärkungskomponente kann ein Kunststoff, ein Faserverbundstoff thermo- oder duroplastischer Art, insbesondere (eine Platte aus) Faserverbundkunststoff, eine Metallplatte oder eine Holzplatte sein.

Faserverbundkunststoffe bestehen aus einer Matrix und Verstärkungsfasern.

Die Matrix kann eine thermoplastische Matrix (Polyetheretherketon, PEEK; Polyphenylensulfid, PPS; Polysulfon, PSU; Polyetherimid, PEI; Polytetrafluorethen, PTFE; Polyamid z.B. PA6, PA66, PA612, oder Polypthalamide, PPA; Polyolefin, z.B. Polyethylen, PE, oder Polypropylen, PP; oder/und Polycarbonat, PC), oder eine duroplastische Matrix (Epoxidharz, EP, z.B. 2 %; ungesättigtes Polyesterharz, UP, z.B. 8 %; Vinylesterharz, VE; Phenol-Formaldehydharz, PF, z.B. 38 %; Diallylphthalatharz, DAP; Methacrylatharz, MMA; Polyurethan, PUR; oder/und Aminoharze) sein.

Verstärkungsfasern können anorganische nicht-metallische Verstärkungsfasern (Basaltfasern, Borfasern, Glasfasern, Keramikfasern, Kieselsäurefasern, Kohlenstofffasern, oder/und Quarzfasern), organische Verstärkungsfasern (Aramidfasern, PBO-Fasern, Polyester-Fasern, Nylon-Fasern, Polyethylen-Fasern, und/oder Polymethylmethacrylat-Fasern), und/oder metallische Verstärkungsfasern (Stahlfasern) sein.

Die Verstärkungsfasern können bezogen auf ihre Länge Kurzfaser (0,1 bis 1 mm), Langfaser (1 bis 50 mm), oder Endlosfasern (> 50 mm) sein. Letztere sind wegen der sehr hohen Steifigkeit, die sie vermitteln, bevorzugt. Die Anordnung der Verstärkungsfasern kann gewebt oder gelegt sein. Die Anordnung der Verstärkungsfasern kann auch ein- oder mehrschichtig sein.

Die Verstärkungskomponente kann aus einem Kunststoff bestehen, der mit dem Kunststoff des flächigen Materials kompatibel ist, so dass sich eine stoffschlüssige Verbindung zwischen Verstärkungskomponente und flächigem Material ergeben kann. Ferner kann die Verstärkungskomponente aus einem Material bestehen, dass mit dem Kunststoff des flächigen Materials kompatibel ist, aber mit einem Kunststoff zumindest an den Stellen, an dem die Verstärkungskomponente mit dem flächigen Material in Kontakt tritt, oder in der Gänze, beschichtet sein, so dass sich wieder eine stoffschlüssige Verbindung zwischen Verstärkungskomponente und flächigem Material ergeben kann (In diesem Fall entspricht die Steifigkeit der beschichteten Verstärkungskomponente der Steifigkeit der unbeschichteten Verstärkungskomponente). Zusätzlich kann sich aber auch ein Formschluss ergeben.

Ferner kann die Verstärkungskomponente aus einem Material bestehen, dass mit dem Kunststoff des flächigen Materials nicht kompatibel ist, so dass sich eine formschlüssige Verbindung zwischen Verstärkungskomponente und flächigem Material ergeben kann.

Das (flächige) Material kann ein Spritzgießmaterial, insbesondere ein Spritzgießmaterial thermoplastischer Art, sein. Spritzgießmaterial thermoplastischer Art kann Polyolefin (Polypropylen, PP, Polyethylen, PE), Plexiglas, PMMA, Polycarbonat, PC, Polystyrol, PS, und dessen Copolymere (z.B. ABS = Acrylnitril-Butadien-Styrol), Polyamid, PA, oder Polyoxymethylen sein.

Das Material kann ein Fließpressmaterial thermoplastischer oder duroplastischer Art sein. Das thermoplastische Fließpressmaterial kann ein Long Fibre Thermoplast (LFT mit Glasfaser oder Karbonfaser), Direct Long Fibre Thermoplast (D-LFT), Glas Mat Thermoplast, GMT, oder Carbon Fiber Reinforced Polymer, CFRP, sein. Das duroplastische Fließpressmaterial kann Sheet Molding Compound (SMC mit Glasfaser oder Karbonfaser), Direct Sheet Molding Compound, D-SMC, oder Bulk Molding Compound, BMC, sein.

Die Wahl von Material und Verstärkungskomponente hängt von dem gewünschten Einsatzgebiet ab, wobei der Fachmann Materialen und Verstärkungskomponenten entsprechend dem Einsatzgebiet auswählen kann. Wesentlich ist nur, dass die Steifigkeit der Verstärkungskomponente höher ist als die Steifigkeit des Materials.

Die Leisten des flächigen Materials können einen Rand, der die Gesamtheit der ersten Schmalseite der Verstärkungskomponente enthält, vollständig umschließen. Alternativ kann das flächige Material diesen Rand auch nur teilweise umschließen, also z.B. nur eine Stirnseite der Verstärkungskomponente, dass Bereiche des Randes/der Schmalseite der Verstärkungskomponente frei bleiben.

Somit wird der gesamte umlaufende Rand der Verstärkungskomponente durch das flächige Material stabilisiert.

Ferner richtet sich die Erfindung auf einen Frontendmodulträger, eine Sitzstruktur, ein Türsystem, Fahrzeugunterbodenstruktur, Unterfahrschutz, Kraftstofftankgehäuse, flächige (Struktur-) Bauteile für Batteriesysteme oder Batterien (z.B. Zellmodulendplatten) oder Batteriegehäuse umfassend das oben beschriebene Bauteil.

Insbesondere Frontendmodulträger, Sitzstrukturen, Türsysteme, Fahrzeugunterbodenstrukturen, Unterfahrschutze, Kraftstofftankgehäuse oder Batteriegehäuse können großen mechanischen Belastungen ausgesetzt sein, insbesondere bei Aufprall- oder Crash-Lasten. Daher eignen sich die die hier beschriebenen Bauteile insbesondere zur Gestaltung dieser Komponenten.

Die Erfindung ist auch gerichtet auf ein Verfahren zur Herstellung des oben beschriebenen Bauteils umfassend:
a. Bereitstellen der Verstärkungskomponente in einer mindestens zweiteiligen Form;
b. Einbringen des Materials in die Form;
c. Ausbilden des Bauteils durch Spritzgießen oder Fließpressen in der Form;
d. Entnahme des erhaltenen Bauteils.

Als Form wird hier jede geeignete Form bzw. Werkzeug verstanden, die/das die flächige Verstärkungskomponente aufnehmen kann und im geschlossenen Zustand um die Verstärkungskomponente herum Hohlräume bereitstellt, in die durch Kanäle das Material eingespritzt (Spritzgießen), oder Material zur Pressung bereitgestellt (Fließpressen) werden kann. Beim Spritzgießen kann die Entnahme des Bauteils nach Erreichen des Erstarrungspunktes des Materials (3) durchgeführt werden. Die Hohlräume sind so gestaltet, dass sie dem Material die Gestaltung verleihen können, die durch das oben beschriebene Bauteil definiert wird.

### Kurze Beschreibung der Figuren

Figur 1 illustriert das erfindungsgemäße Bauteil in einer Querschnittsansicht.
Figur 2 illustriert das erfindungsgemäße Bauteil in einer Draufsicht.
Figur 3 illustriert das flächige Material des erfindungsgemäßen Bauteils in einer perspektivischen Sicht, in der Einbuchtungen sichtbar sind.

### Beispiel

In der nun folgenden Beschreibung bezeichnen gleiche Bezugszeichen gleiche Komponenten beziehungsweise gleiche Komponenten, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in anderen Ausführungsformen verwendbar.

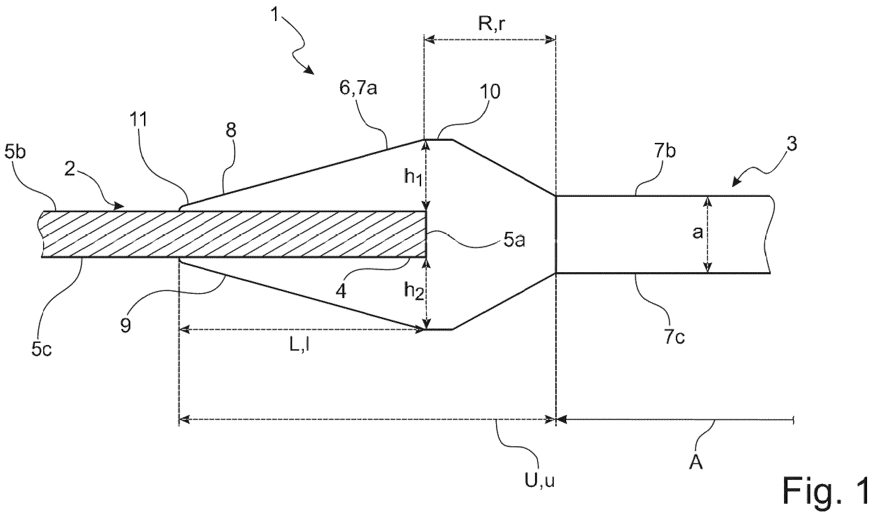

Figur 1 illustriert das erfindungsgemäße Bauteil 1 in einer Querschnittsansicht.

Das Bauteil 1 umfasst eine Verstärkungskomponente 2, die flächig ausgeprägt ist und eine hohe Steifigkeit aufweist. Infrage kommen hier Faserverbundwerkstoffe thermo- oder duroplastischer Art, aber auch Metallplatten und andere Platten.

Die Verstärkungskomponente 2 weist an einem ersten Ende 4 (in Figur 1 auf der rechten Seite dargestellt) eine Schmalseite 5a auf, die durch eine Oberseite 5b und Unterseite 5c begrenzt wird. Das gegenüberliegende Ende der Verstärkungskomponente ist im Bild nicht dargestellt.

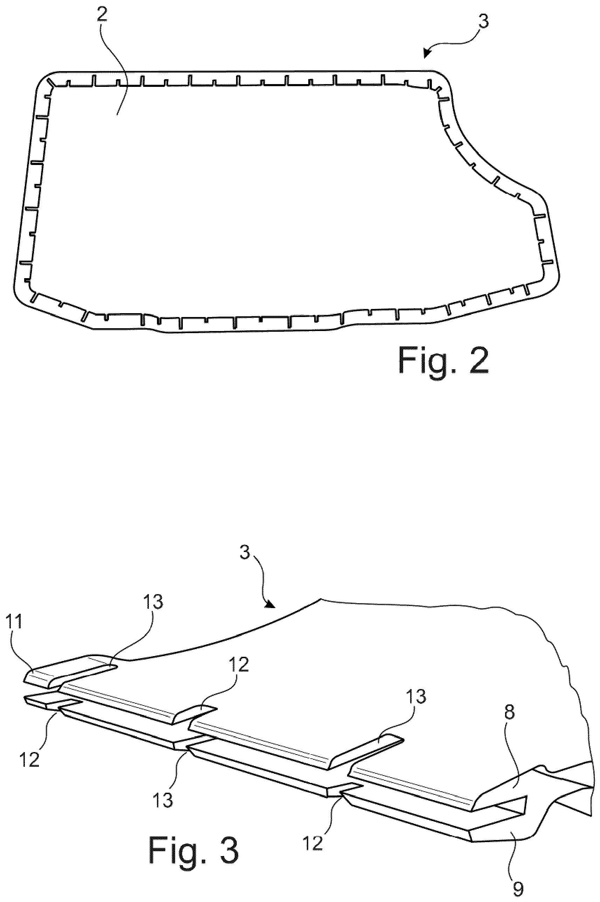

Diese Verstärkungskomponente 2 ist mit einem weniger steifen (Spritzgieß-)Material 3 in einem Umschließungsbereich U mit der Länge u beidseitig überspritzt. Dieses Material 3 ist ebenfalls weitgehend flächig ausgeprägt. Durch die beidseitige Überspritzung bildet das Material 3 an einem zweiten Ende 6 (in Figur 1 auf der linken Seites des Materials 3) zwei Leisten 8, 9 aus dem Material 3, die an der Verstärkungskomponente 2 in einem Überlappungsbereich L (direkt, also ohne Hohlraumbildung) anliegen. Das gegenüberliegende Ende des Materials 3 ist im Bild nicht dargestellt. Eine Darstellung des Materials 3 mit den zwei Leisten 8, 9 ohne die Verstärkungskomponente 2 findet sich in Figur 3. Es ist in Figuren 2 und 3 erkennbar, dass die zwei Leisten sich an der Schmalseite des Materials 3 übereinander befinden, und ungefähr gleichweit über die Verstärkungskomponente 2 ragen.

Der Umschließungsbereich U umfasst den Bereich, in dem das Material 3 sich in einem Rampenbereich R gegenüber einem Grundmaterialbereich A und von diesem ausgehend zunächst verdickt, aber noch nicht mit der Verstärkungsplatte überlappt und einem Überlappungsbereich L, in dem das Material 3 mit der Verstärkungsplatte überlappt.

Das flächige Material 3 verläuft über den gesamten Umschließungsbereich U (im Querschnitt, d.h. also quer zur Ausdehnung der Oberfläche des Materials 3) bogenartig, wie in Figur 1 dargestellt.

Bogenartig im Sinne der Erfindung kann eine fortlaufend stetige Zunahme/Abnahme der Wanddicke des Materials 3 im Umschließungsbereich U bezeichnen, also eine tatsächliche Bogenform. Bogenartig kann aber bedeuten, dass eine Form vorliegt, die aus mehrere geraden Abschnitten besteht, wobei die Übergänge zwischen den mehreren geraden Abschnitten eckig sind und/oder durch einen Bogen gebildet werden, wie es in Figur 1 dargestellt ist.

Insbesondere ist die höchste Wanddicke h₁, h₂ des Materials 3 bzw. der Leisten 8, 9 in dem Bereich über der Grenzfläche der Verstärkungskomponente 2 und des Materials 3. Daher ist die Wanddicke h₁, h₂ des Materials 3 an der Position, an der das erste Ende 4 eine Schmalseite 5a der flächigen Verstärkungskomponente 2 bildet, maximal. An dieser Position, an der das erste Ende 4 eine Schmalseite 5a der flächigen Verstärkungskomponente 2 bildet, weist die Oberfläche (Oberseite 7b oder Unterseite 7c) des Materials 3 den größten Abstand zur gegenüberliegenden Oberfläche (Oberseite 5b oder Unterseite 5c ) der Verstärkungskomponente 2 auf.

Dadurch ist die Wanddicke h₁, h₂ des Materials 3, bzw. der Leiste 8, 9, der Leisten 8, 9, die das Material 3 an dieser Position bildet, am höchsten in dem Übergangsbereich zwischen flächiger Verstärkungskomponente 2 und dem flächigen Material 3 ("maximale Wanddicke"). Diese Position ist diejenige, an der es bei Belastung am ehesten zu einem Bruch des Bauteils 1 kommen könnte. Daher wird durch die Wanddicke des Materials 3 an dieser Position einem Bruch des Bauteils 1 besonders effektiv entgegengewirkt.

Ferner ist diese maximale Wanddicke h₁, h₂ gleich oder größer als die Grundmaterialwanddicke ½ a, das heißt der Wanddicke des Materials 3 außerhalb des Umschließungsbereichs U.

Daher wird durch die Wanddicke h₁, h₂ des Materials 3 an dieser Position einem Bruch des Bauteils 1 in besonders vorteilhafter Weise entgegengewirkt. Ferner wird dadurch sichergestellt, dass die Wanddicke auch im Übergangsbereich, d.h. dem Bereich an dem die Schmalseite 5a der Verstärkungskomponente auf flächige Material 3 trifft, mindestens der Wanddicke ½ a im Grundmaterialbereich A entspricht, und daher die Festigkeit in diesem Bereich ungefähr der entspricht, die im übrigen Bauteil 1 vorzufinden ist.

Die Länge des Überlappungsbereiches L beträgt beispielsweise das 2 bis 4-fache der Grundmaterialwanddicke a.

Es hat sich erwiesen, dass dieses Verhältnis zwischen Länge des Überlappungsbereiches L und Material 3 eine besonders hohe Stabilität des Bauteils 1 sicherstellt, während gleichzeitig ein zu hoher Einsatz des Materials 3 vermieden wird.

Figur 2 illustriert das erfindungsgemäße Bauteil 1 in einer Draufsicht und Figur 3 zeigt eine perspektivische Detailansicht des Materials 3 aus Figur 2.

Wie aus Figuren 2 und 3 können an der Stirnseite 11 der Leisten 8, 9 aus dem Überlappungsbereich Einbuchtungen 12, 13 (d.h. Aussparungen, Ausnehmungen) vorgesehen seien.

Diese Einbuchtungen 12, 13 können durch in der Form bzw. in dem Werkzeug, die/das zur Herstellung des Bauteils 1 verwendet wird, vorgesehene Niederhalter hergestellt werden. Niederhalter können eine Verschiebung oder ein "Aufspleißen" (z.B. Lösen des Verbunds der Gewebelagen im Falle eines Organosheets) der Verstärkungskomponente 2 durch die anströmende (Kunststoff)Schmelze das angepresste Material verringern bzw. vermeiden und die flächige Verstärkungskomponente 2 gegen den Schmelzestrom stabilisieren, so dass dieser idealerweise mittig zur Wanddicke des Materials gehalten wird (bzw. dieser nicht einseitig zum Randbereich der Wandung gedrückt wird).

In der Figur 3 sind in beiden Leisten 8,9 Einbuchtungen 12, 13 vorgesehen sein.

Dies bietet den Vorteil, dass während des Herstellungsprozesses eine weitgehend symmetrische Stabilisierung der flächigen Verstärkungskomponente 2 gegenüber dem Schmelzestrom erfolgt.

Wie in Figur 3 beispielhaft gezeigt, können die Einbuchtungen 12, 13 der ersten Leiste 8 gegenüber den Einbuchtungen der zweiten Leiste 9 gegenüberliegend angeordnet sein.

Somit liegen in den zwei Leisten 8, 9 die jeweiligen Einbuchtungen 12, 13 direkt übereinander.

Dies bietet den Vorteil, dass während des Herstellungsprozesses eine sehr symmetrische Stabilisierung der flächigen Verstärkungskomponente 2 gegenüber dem Schmelzestrom oder dem gepressten Material erfolgt.

Wie in Figuren 2 und 3 gezeigt, können die Einbuchtungen 12, 13 zwei unterschiedliche Längen aufweisen und die Einbuchtungen 12, 13 mit zwei unterschiedlichen Längen alternierend angeordnet sein. Dabei kann eine Einbuchtung 13 mit einer langen Länge in der oberen Leiste 8, wie bei den Einbuchtungen, die links und rechts in Figur 3 angeordnet sind, einer Einbuchtung 12 mit einer kurzen Länge in der darunter liegende Leiste 9 gegenüberliegen. Entsprechend kann einer Einbuchtung 12 mit einer kurzen Länge in der oberen Leiste 8, wie bei der Einbuchtung 12, die mittig in Figur 3 angeordnet ist, eine Einbuchtung 13 mit einer langen Länge in der darunterliegenden Leiste 9 gegenüberliegen.

Diese Anordnung hat den Vorteil, dass das fertige Bauteil 1 bei Einsatz zum Beispiel in einem Fluidbehälter besonders dicht gegenüber dem Fluid ist. Ferner wird eine sichtbare Bindenaht vermieden.

Wie in Figur 2 gezeigt, kann das Material 3 die Schmalseite 5a einer flächige Verstärkungskomponente 2 vollständig umschließen. Es ist aber auch vorstellbar, dass das Material 3 nur an einen oder mehrere Teilbereiche der flächigen Verstärkungskomponente 2 angebracht ist.

### Bezugszeichenliste

- 1:: Bauteil
- 2:: (flächige) Verstärkungskomponente
- 3:: (flächiges) Material
- 4:: erstes Ende der flächigen Verstärkungskomponente
- 5a:: Schmalseite der flächigen Verstärkungskomponente
- 5b:: Oberseite der flächigen Verstärkungskomponente
- 5c:: Unterseite der flächigen Verstärkungskomponente
- 6:: zweites Ende des flächigen Materials
- 7a:: Schmalseite des flächigen Materials
- 7b:: Oberseite des flächigen Materials
- 7c:: Unterseite des flächigen Materials
- 8:: erste Leiste
- 9:: zweite Leiste
- 10:: Position der maximalen Wanddicke des Materials
- 11:: Stirnseite des Überlappungsbereichs
- 12:: Einbuchtung, kurz
- 13:: Einbuchtung, lang
- U, u:: Umschließungsbereich, Länge des Umschließungsbereichs
- R, r:: Rampenbereich
- A, a:: Grundmaterialbereich, Grundmaterialdicke
- L, l:: Überlappungsbereich, Länge des Überlappungsbereichs
- h₁:: Wanddicke der ersten Leiste
- h₂:: Wanddicke der zweiten Leiste

## Patentansprüche

1. Bauteil (1) umfassend eine flächige Verstärkungskomponente (2) mit einer ersten Steifigkeit und ein flächiges Material (3) mit einer zweiten Steifigkeit, wobei die erste Steifigkeit höher ist als die zweite Steifigkeit, wobei die Verstärkungskomponente (2) an einer ersten Schmalseite (5a) ein erstes Ende (4) und das Material (3) an einer zweiten Schmalseite (7a) ein in zwei Leisten (8, 9) aufgeteiltes zweites Ende (6) aufweist, und die zwei Leisten (8, 9) des zweiten Endes (6) das erste Ende (4) in einem Umschließungsbereich (U) beidseitig umschließen, **dadurch gekennzeichnet, dass** die maximale Wanddicke (h1, h2) gleich oder größer ist als die Hälfte der Grundmaterialwanddicke, das heißt der Wanddicke (a) des Materials (3) außerhalb des Umschließungsbereichs (U), wobei das Material (3) über den gesamten Umschließungsbereich (U) bogenartig verläuft, und
wobei die Wanddicke (h₁, h₂) des Materials (3) an der Position maximal ist, an der die erste Schmalseite (4) der flächigen Verstärkungskomponente (2) auf das zweite Ende (6) des flächigen Materials (3) trifft.

2. Bauteil (1) gemäß einem der einem der vorstehenden Ansprüche **dadurch gekennzeichnet, dass** die Länge des Überlappungsbereiches (L) zwischen Verstärkungskomponente (2) und Material (3) das 1,5 bis 8-fache, das 1,7 bis 6-fache, oder das 2 bis 4-fache der Grundmaterialwanddicke (a) beträgt.

3. Bauteil (1) gemäß einem der vorstehenden Ansprüche
**dadurch gekennzeichnet, dass** in der Stirnseite in mindestens einer der Leisten (8, 9) Einbuchtungen (12, 13) vorgesehen sind.

4. Bauteil (1) gemäß Anspruch 3 **dadurch gekennzeichnet, dass** in beiden Leisten (8, 9) Einbuchtungen (12, 13) vorgesehen sind.

5. Bauteil (1) gemäß Anspruch 4 **dadurch gekennzeichnet, dass** die Einbuchtungen (12, 13) der ersten Leiste (8) gegenüber den Einbuchtungen (12, 13) der zweiten Leiste (12, 13) versetzt angeordnet sind; oder
dass die Einbuchtungen (12, 13) der ersten Leiste (8) gegenüber den Einbuchtungen (12, 13) der zweiten Leiste (9) gegenüberliegend angeordnet sind.

6. Bauteil (1) gemäß einem der Ansprüche 3-5 **dadurch gekennzeichnet, dass** die Länge der Einbuchtungen (12, 13) bei allen Einbuchtungen (12, 13) gleich ist.

7. Bauteil (1) gemäß einem der Ansprüche 3-6 **dadurch gekennzeichnet, dass** in einer der Leisten (8, 9) eine erste Gruppe von Einbuchtungen (13) mit einer ersten Länge und eine zweite Gruppe von Einbuchtungen (12) mit zweiter Länge vorliegen, und die erste Länge größer als die zweite Länge ist.

8. Bauteil (1) gemäß Anspruch 7 **dadurch gekennzeichnet, dass** sowohl in der ersten als auch in der zweiten Leiste (8, 9) die erste Gruppe und die zweite Gruppe von Einbuchtungen (12, 13) vorliegen.

9. Bauteil (1) gemäß einem der Ansprüche 7 oder 8 **dadurch gekennzeichnet, dass** die Einbuchtungen der zweiten Gruppe von Einbuchtungen (12) in der ersten Leiste (8) den Einbuchtungen der ersten Gruppe (13) in der zweiten Leiste (9) gegenüberliegen; und die Einbuchtungen der ersten Gruppe von Einbuchtungen (13) in der ersten Leiste (8) den Einbuchtungen der zweiten Gruppe (12) in der zweiten Leiste (9) gegenüberliegen.

10. Bauteil (1) gemäß einem der Ansprüche 7-9 **dadurch gekennzeichnet, dass** die Einbuchtungen der zweiten Gruppe von Einbuchtungen (12) in der ersten Leiste (8) den Einbuchtungen der zweiten Gruppe (12) in der zweiten Leiste (9) gegenüberliegen; und die Einbuchtungen der ersten Gruppe von Einbuchtungen (13) in der ersten Leiste (8) den Einbuchtungen der ersten Gruppe (13) in der zweiten Leiste (9) gegenüberliegen.

11. Bauteil (1) gemäß einem der vorstehenden Ansprüche **dadurch gekennzeichnet, dass** die Verstärkungskomponente (2) ein Kunststoff, ein Faserverbundstoff thermo- oder duroplastischer Art, eine Metallplatte oder eine Holzplatte ist; und/oder
dass das Material (3) ein Spritzgießmaterial, insbesondere ein Spritzgießmaterial thermoplastischer Art, oder ein Fließpressmaterial, insbesondere eine Fließpressmaterial thermoplastischer oder duroplastischer Art ist; und/der
dass die Leisten (8, 9) des flächigen Materials (3) einen Rand, der die Gesamtheit der ersten Schmalseite der Verstärkungskomponente enthält, vollständig umschließen oder nur einen Teilbereich des Randes umschließen.

12. Frontendmodulträger, Sitzstruktur, Türsystem, Kraftstofftankgehäuse, Fahrzeugunterbodenstruktur, Unterfahrschutz, Strukturbauteile für Batteriesysteme oder Batteriegehäuse umfassend ein Bauteil (1) gemäß einem der vorstehenden Ansprüche.

13. Verfahren zur Herstellung eines Bauteils (1) gemäß einem der vorstehenden Ansprüche umfassend:
a. Bereitstellen der Verstärkungskomponente (2) in einer mindestens zweiteiligen Form;
b. Einbringen des Materials (3) in die Form;
c. Ausbilden des Bauteils durch Spritzgießen oder Fließpressen in der Form;
d. Entnahme des erhaltenen Bauteils (1) aus der geöffneten Form.

## Claims

1. A component (1) having a flat reinforcing element (2) of a first stiffness and a flat material (3) of a second stiffness, the first stiffness being higher than the second stiffness, the reinforcing element (2) having a first end (4) on a first narrow side (5a) and the material (3) on a second narrow side (7a) having a second end (6) that bifurcates into two strips (8, 9), and the two strips (8, 9) of the second end (6) enclosing the first end (4) on both sides in a zone of enclosure (U), **characterized in that** the maximum wall thickness (h1, h2) is equal to or greater than half the base material wall thickness, i.e., the wall thickness (a) of the material (3) outside the zone of enclosure (U), wherein the material (3) runs in an arc over the entire zone of enclosure (U), and wherein the wall thickness (h₁, h₂) of the material (3) is at a maximum at the position at which the first narrow side (4) of the flat reinforcing element (2) meets the second end (6) of the flat material (3).

2. The component (1) according to any of the preceding claims, **characterized in that** the length of the zone of overlap (L) between the reinforcing element (2) and the material (3) is 1.5 to 8 times, 1.7 to 6 times, or 2 to 4 times the base material wall thickness (a).

3. The component (1) according to any of the preceding claims, **characterized in that** indentations (12, 13) are provided in at least one of the strips (8, 9) on the end face.

4. The component (1) according to claim 3, **characterized in that** indentations (12, 13) are provided in both strips (8, 9).

5. The component (1) according to claim 4, **characterized in that** the indentations (12, 13) of the first strip (8) are arranged offset relative to the indentations (12, 13) of the second strip (12, 13); or
that the indentations (12, 13) of the first strip (8) are arranged opposite the indentations (12, 13) of the second strip (9).

6. The component (1) according to any of claims 3-5, **characterized in that** the length of the indentations (12, 13) is the same for all indentations (12, 13).

7. The component (1) according to any of claims 3-6, **characterized in that**, in one of the strips (8, 9), there is a first group of indentations (13) having a first length and a second group of indentations (12) having a second length, and the first length is greater than the second length.

8. The component (1) according to claim 7, **characterized in that** the first group and the second group of indentations (12, 13) are present both in the first and in the second strip (8, 9).

9. The component (1) according to claim 7 or 8, **characterized in that** the indentations of the second group of indentations (12) in the first strip (8) are opposite the indentations of the first group (13) in the second strip (9), and **in that** the indentations of the first group of indentations (13) in the first strip (8) are opposite the indentations of the second group (12) in the second strip (9).

10. The component (1) according to any of claims 7-9, **characterized in that** the indentations of the second group of indentations (12) in the first strip (8) are opposite the indentations of the second group (12) in the second strip (9), and **in that** the indentations of the first group of indentations (13) in the first strip (8) are opposite the indentations of the first group (13) in the second strip (9).

11. The component (1) according to any of the preceding claims, **characterized in that** the reinforcing element (2) is a plastic, a fiber composite of a thermoplastic or duroplastic type, a metal plate or a wooden panel; or/and
that the material (3) is an injection molding material, in particular an injection molding material of a thermoplastic type, or an extrusion molding material, in particular an extrusion molding material of a thermoplastic or duroplastic type; and/or the strips (8, 9) of the flat material (3) completely enclose an edge that contains the entirety of the first narrow side of the reinforcing element or enclose only a partial region of the edge.

12. A front-end module carrier, seat structure, door system, fuel tank housing, vehicle underbody structure, underrun protection, structural components for battery systems or battery housings comprising a component (1) according to any of the preceding claims.

13. A method for producing a component (1) according to any of the preceding claims, comprising:
a. providing the reinforcing element (2) in an at least two-part mold;
b. introducing the material (3) into the mold;
c. forming the component by means of injection molding or extrusion in the mold;
d. removing the component (1) obtained from the opened mold.

## Revendications

1. Élément (1) comprenant un composant de renforcement plat (2) d'une première rigidité et un matériau plat (3) d'une seconde rigidité, dans lequel la première rigidité est supérieure à la seconde rigidité, dans lequel le composant de renforcement (2) présente, sur un premier côté étroit (5a), une première extrémité (4) et le matériau (3) présente, sur un second côté étroit (7a), une seconde extrémité (6) divisée en deux baguettes (8, 9), et les deux baguettes (8, 9) de la seconde extrémité (6) entourent de part et d'autre la première extrémité (4) dans une zone d'entourage (U), **caractérisé en ce que** l'épaisseur de paroi (h1, h2) maximale est supérieure ou égale à la moitié de l'épaisseur de paroi de matériau de base, c'est-à-dire l'épaisseur de paroi (a) du matériau (3) en dehors de la zone d'entourage (U), dans lequel le matériau (3) s'étend à la manière d'un arc sur toute la zone d'entourage (U), et dans lequel l'épaisseur de paroi (h₁, h₂) du matériau (3) est maximale à la position à laquelle le premier côté étroit (4) du composant de renforcement plat (2) rencontre la seconde extrémité (6) du matériau plat (3).

2. Élément (1) selon l'une des revendications précédentes,
**caractérisé en ce que** la longueur de la zone de chevauchement (L) entre le composant de renforcement (2) et le matériau (3) est de 1,5 à 8 fois, de 1,7 à 6 fois, ou de 2 à 4 fois l'épaisseur de paroi de matériau de base (a).

3. Élément (1) selon l'une des revendications précédentes,
**caractérisé en ce que** des rainures (12, 13) sont prévues dans le côté frontal dans au moins l'une des baguettes (8, 9).

4. Élément (1) selon la revendication 3, **caractérisé en ce que** des rainures (12, 13) sont prévues dans les deux baguettes (8, 9).

5. Élément (1) selon la revendication 4, **caractérisé en ce que** les rainures (12, 13) de la première baguette (8) sont disposées de manière décalée par rapport aux rainures (12, 13) de la seconde baguette (12, 13) ; ou
**en ce que** les rainures (12, 13) de la première baguette (8) sont disposées en face des rainures (12, 13) de la seconde baguette (9).

6. Elément (1) selon l'une des revendications 3 à 5, **caractérisé en ce que** la longueur des rainures (12, 13) est la même pour toutes les rainures (12, 13).

7. Élément (1) selon l'une des revendications 3 à 6, **caractérisé en ce que,** dans l'une des baguettes (8, 9), un premier groupe de rainures (13) d'une première longueur et un second groupe de rainures (12) d'une seconde longueur sont présents, et la première longueur est supérieure à la seconde longueur.

8. Élément (1) selon la revendication 7, **caractérisé en ce que** le premier groupe et le second groupe de rainures (12, 13) sont présents à la fois dans la première et dans la seconde baguette (8, 9).

9. Élément (1) selon l'une des revendications 7 ou 8, **caractérisé en ce que** les rainures du second groupe de rainures (12) dans la première baguette (8) sont en face des rainures du premier groupe (13) dans la seconde baguette (9) ; et les rainures du premier groupe de rainures (13) dans la première baguette (8) sont en face des rainures du second groupe (12) dans la seconde baguette (9).

10. Élément (1) selon l'une des revendications 7 à 9, **caractérisé en ce que** les rainures du second groupe de rainures (12) dans la première baguette (8) sont en face des rainures du second groupe (12) dans la seconde baguette (9) ; et les rainures du premier groupe de rainures (13) dans la première baguette (8) sont en face des rainures du premier groupe (13) dans la seconde baguette (9).

11. Élément (1) selon l'une des revendications précédentes **caractérisé en ce que** le composant de renforcement (2) est une matière plastique, un matériau composite fibreux de type thermoplastique ou thermodurcissable, une plaque métallique ou une plaque de bois ; et/ou
**en ce que** le matériau (3) est un matériau moulé par injection, en particulier un matériau moulé par injection de type thermoplastique, ou un matériau extrudé, en particulier un matériau extrudé de type thermoplastique ou thermodurcissable ; et/ou
**en ce que** les baguettes (8, 9) du matériau plat (3) entourent complètement un bord contenant la totalité du premier côté étroit du composant de renforcement ou n'entourent qu'une zone partielle du bord.

12. Support de module d'extrémité avant, structure de siège, système de porte, boîtier de réservoir de carburant, structure de soubassement de véhicule, protection anti-encastrement, éléments structuraux pour systèmes de batterie ou boîtier de batterie comprenant un élément (1) selon l'une des revendications précédentes.

13. Procédé de fabrication d'un élément (1) selon l'une des revendications précédentes, comprenant :
a. la fourniture du composant de renforcement (2) sous une forme au moins en deux parties ;
b. la mise en place du matériau (3) dans le moule ;
c. la formation de l'élément par moulage par injection ou par extrusion dans le moule ;
d. le retrait de l'élément (1) obtenu du moule ouvert.
